# EUROPÄISCHE PATENTSCHRIFT

(11) **EP 3 509 969 B1**
(45) Veröffentlichungstag und Bekanntmachung des Hinweises auf die Patenterteilung: **07.06.2023**
(21) Anmeldenummer: 17764316.0
(22) Anmeldetag: 18.08.2017
(51) Int. Cl.: B65G 1/04

(54) **AUTOMATISIERTES LAGERSYSTEM ZUM TRANSPORT VON IN FAHRTRICHTUNG GEDREHTEN LADUNGSTRÄGERN**
AUTOMATED STORAGE SYSTEM FOR TRANSPORTING LOAD CARRIERS ROTATED INTO A TRAVEL DIRECTION
SYSTÈME DE STOCKAGE AUTOMATISÉ SERVANT AU TRANSPORT DE SUPPORTS DE CHARGE TOURNÉS DANS LA DIRECTION DE DÉPLACEMENT

(30) Priorität: 09.09.2016 AT 507982016
(43) Veröffentlichungstag der Anmeldung: 17.07.2019
(73) Patentinhaber: Knapp AG, 8075 Hart bei Graz (AT)
(72) Erfinder: HOLAS, Johannes, 8046 Stattegg (AT); GÜTL, Bernhard, 8301 Kainbach bei Graz (AT); HORNHOFER, Franz, 8047 Kainbach (AT); PENDL, Marc, 8330 Feldbach (AT); WEND, Michael, 33619 Bielefeld (DE); SIEKSMEIER, Dirk, 32139 Spenge (DE); MATHI, Franz, 8200 Gleisdorf (AT)
(74) Vertreter: Röggla, Harald
(86) Internationale Anmeldenummer: PCT/AT2017/060204
(87) Internationale Veröffentlichungsnummer: WO 2018/045403

(56) Entgegenhaltungen:
- EP-A1- 2 781 471
- DE-A1-102012 215 364
- JP-A- H04 209 104
- JP-A- 2000 044 014
- JP-A- 2006 327 807

## Beschreibung

Die Erfindung betrifft ein automatisiertes Lagersystem mit zumindest zwei Regalen mit Lagerplätzen zum Lagern von Artikel aufweisenden Ladungsträger, wobei die Ladungsträger in einer Lagerrichtung in den Lagerplätzen lagerbar sind, und mit einer durch die zwei Regale gebildeten Regalgasse, in der ein ein Transfermittel aufweisendes Lastaufnahmemittel in einer Fahrtrichtung verfahrbar ist, um bei einem Transfervorgang mit dem Transfermittel zumindest einen mit dem Lastaufnahmemittel transportierten Ladungsträger von dem Lastaufnahmemittel in den Lagerplatz einzulagern oder zumindest einen Ladungsträger aus dem Lagerplatz auf das Lastaufnahmemittel aufzunehmen.

Die Erfindung betrifft weiters ein Verfahren zum Lagern von Artikeln aufweisenden Ladungsträgern in Lagerplätzen von zwei eine Regalgasse bildenden Regalen, bei dem bei einem Transfervorgang der mit einem Lastaufnahmemittel in der Regalgasse transportierte Ladungsträger von dem Lastaufnahmemittel in einer Lagerrichtung in einen der Lagerplätze des Regals eingelagert wird oder der in der Lagerrichtung in dem Lagerplatz gelagerte Ladungsträger auf das Lastaufnahmemittel aufgenommen wird.

Das Dokument DE 10 2012 215 364 A1 offenbart so ein automatisiertes Lagersystem zum Lagern von Artikeln, wie beispielsweise Hemden, die auf Kleiderbügeln aufgehängt sind, und von Artikeln, die in Fördertaschen liegen. Jeder dieser Kleiderbügel oder Fördertaschen hängt auf einem Adapter, der gemeinsam mit dem Kleiderbügel oder der Fördertasche einen Ladungsträger bildet und der eine oder mehrere Rollen und eine Öse zum Aufhängen des Kleiderbügels oder der Fördertasche aufweist. Die Adapter rollen in einem einen Schlitz aufweisenden leicht geneigten Profil angetrieben durch die Schwerkraft oder sie werden von einem Kettenförderer in dem Profil oder einer Hängefördertechnik angetrieben befördert.

Das Lagersystem weist mehrere Regale mit übereinander liegenden Regalebenen auf, wobei je eine in einer Lagerrichtung ausgerichtete Lagerstange einen Lagerplatz in den Regalen bildet.

Auf der Lagerstange kann eine Anzahl an Adaptern mit Artikeln gelagert werden. Durch zwei parallel angeordnete Regale wird eine Regalgasse gebildet, in der ein Regalbediengerät als Lastaufnahmemittel in einer Fahrtrichtung längs der Regalgasse verfahrbar ist. Das Regalbediengerät weist eine in Lagerrichtung ausgerichtete waagrecht angeordnete Zwischenlagerstange und Transfermittel auf, um bei einem Transfervorgang Adapter mit Artikeln von der Lagerstange auf die Zwischenlagerstange aufzunehmen. Aus dem Stand der Technik sind aber auch Zwischenlagerstangen bekannt, die leicht geneigt ausgebildet sind. Die auf der Zwischenlagerstange aufgenommenen Adaper mit Artikeln können dann mit dem Lastaufnahmemittel in der Regalgasse verfahren werden, um die Artikel auszulagern oder bei einem weiteren Transfervorgang von der Zwischenlagerstange auf eine andere Lagerstange in einem anderen Lagerplatz wieder einzulagern. JP H04 209104 A offenbart ein Lagersystem mit zumindest zwei Regalen mit Lagerplätzen zum Lagern von Artikel aufweisenden Ladungsträger, wobei die Ladungsträger in einer Lagerrichtung in den Lagerplätzen lagerbar sind, und mit einer durch die zwei Regale gebildeten Regalgasse, in der ein ein Transfermittel aufweisendes Lastaufnahmemittel in einer Fahrtrichtung verfahrbar ist, um bei einem Transfervorgang mit dem Transfermittel zumindest einen mit dem Lastaufnahmemittel transportierten Ladungsträger von dem Lastaufnahmemittel in den Lagerplatz einzulagern oder zumindest einen Ladungsträger aus dem Lagerplatz auf das Lastaufnahmemittel aufzunehmen, wobei das Lastaufnahmemittel zum Transportieren zumindest eines Ladungsträgers in Fahrtrichtung ausgebildet ist, und wobei der Ladungsträger als Adapter zur Aufnahme von Artikeln enthaltenden Kleiderbügeln oder zur Aufnahme von Artikeln beinhaltenden Taschen gebildet ist, wobei die Lagerplätze als Lagerstangen ausgebildet sind, die beim Transfervorgang gemeinsam mit den Transfermitteln und einer Zwischenlagerstange des Lastaufnahmemittels einen Transferweg bilden, um die Adapter zwischen Lagerplatz und Lastaufnahmemittel zu transferieren.

Im Betrieb des bekannten automatischen Lagersystems hat sich als Nachteil erwiesen, dass die in einem Lagerplatz auf einer Lagerstange hintereinander lagerbaren Adapter mit Artikeln in ihrer Anzahl durch die Länge der Zwischenlagerstange des Lastaufnahmemittels und letztendlich durch die Breite der Regalgasse begrenzt ist. Überlegungen zum Erzielen einer größeren Lagerdichte von Artikeln in diesem bekannten Lagersystem haben ergeben, dass die Lagertiefe der Regale, also die Länge der Lagerstangen, nur dann erhöht werden kann, wenn gleichzeitig die Breite der Regalgasse erhöht wird, was wiederum einen nachteiligen Effekt auf die Lagerdichte hat. Erhöht man bei Vergrößerung der Lagertiefe der Regale die Breite der Regalgasse nicht, dann hat dies zur Folge, dass nur noch ein Teil der auf der Lagerstange gelagerten Adapter mit Artikeln auf die Zwischenlagerstange passen, weshalb das Lastaufnahmemittel mehrfach in der Regalgasse fahren muss, um die Adapter mit Artikeln eines Lagerplatzes zu transportieren, was ebenfalls nachteilig ist.

Der Erfindung liegt die Aufgabe zugrunde ein automatisches Lagersystem und ein Verfahren zum Lagern von Artikeln aufweisenden Ladungsträgern zu schaffen, bei dem eine möglichst große Lagerdichte erreicht wird ohne die Anzahl der Fahrten des Lastaufnahmemittels in der Regalgasse zu erhöhen. Erfindungsgemäß wird diese Aufgabestellung bei einem automatischen Lagersystem dadurch gelöst, dass das Lastaufnahmemittel zum Transportieren zumindest eines Ladungsträgers in Fahrtrichtung ausgebildet ist und, dass das Transfermittel Verdrehmittel aufweist, um den Ladungsträger bei dem Transfervorgang zwischen der Fahrtrichtung auf dem Lastaufnahmemittel und der Lagerrichtung in dem Lagerplatz zu verdrehen.

Erfindungsgemäß wird diese Aufgabestellung bei einem Verfahren zum Lagern von Artikeln aufweisenden Ladungsträgern dadurch gelöst, dass der Ladungsträger beim Transfervorgang zwischen der Lagerrichtung und der Fahrtrichtung längs der Regalgasse gedreht und in Fahrtrichtung transportiert wird.

Hierdurch ist der Vorteil erhalten, dass die Ladungsträger beim Transfervorgang gedreht und dann auf die in Fahrtrichtung angeordnete Zwischenlagerstange verschoben werden. Da die Zwischenlagerstange in Längsrichtung der Regalgasse wesentlich länger als die Breite der Regalgasse ausgebildet sein kann, kann eine wesentlich größere Anzahl an Ladungsträgern gleichzeitig bei einer Fahrt mit dem Lastaufnahmemittel verfahren werden. Hierdurch kann die Anzahl der Fahrten mit dem Lastaufnahmemittel reduziert werden. Besonders vorteilhaft ist, dass das Verhältnis von Lagerfläche, die zu der Länge der Lagerstangen proportional ist, zur Transferfläche, die durch die Flächen der Regalgassen gegeben ist, deutlich verbessert werden kann und somit eine größere Lagerdichte in dem erfindungsgemäßen Lagersystem erreicht werden kann. Diese Vorteile werden auch bei einem Lagersystem mit Kisten, Trays, Kartons oder Paletten als Ladungsträger erzielt.

Diese und weitere vorteilhafte Ausgestaltungen des erfindungsgemäßen automatisierten Lagersystems und des erfindungsgemäßen Verfahrens werden im Folgenden anhand der Figuren näher erläutert.
Figur 1 zeigt ein automatisiertes Lagersystem für Hängeware in einer Seitenansicht.
Figur 2 zeigt einen Teil des Lagersystems gemäß Figur 1 in einer Draufsicht.
Figur 3 zeigt den Teil des Lagersystems gemäß Figur 2 in einer Schrägansicht.
Figur 4 zeigt ein automatisches Lagersystem mit einem Lastaufnahmemittel mit vier Transferwegen.
Figur 5 zeigt ein automatisches Lagersystem für in Kisten als Ladungsträger gelagerten Artikeln in einer Draufsicht.

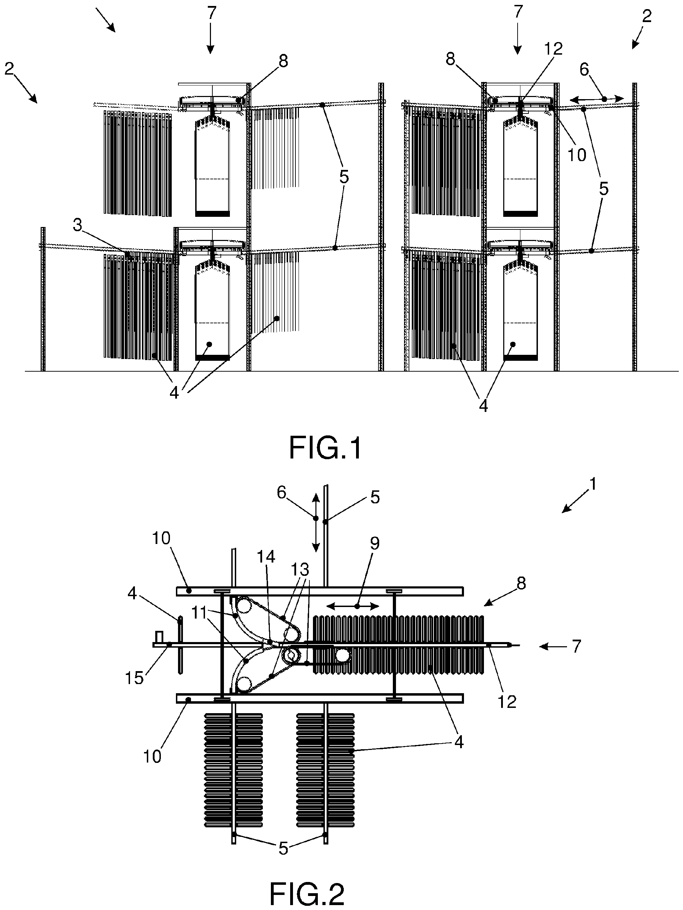

Figur 1 zeigt einen Ausschnitt eines automatisierten Lagersystems 1 mit zwei Regalen 2, die jeweils zwei Ebenen übereinander aufweisen. In jedem Regal 2 sind Lagerplätze zum Lagern von Artikeln vorgesehen. Die Artikel sind einerseits Hängeware, wie beispielsweise Hemden oder Hosen, die auf Kleiderbügeln aufgehängt sind, und andererseits beliebige andere Artikel, die einzeln oder mit anderen Artikeln gemeinsam in Fördertaschen aufgenommen liegen. Die Kleiderbügel und die Fördertaschen hängen auf Adaptern 3, die dem Fachmann beispielsweise von der DE 10 2012 215 364 A1 bekannt sind, und bilden gemeinsam Ladungsträger 4 zum Tragen der Artikel.

Jeder Lagerplatz ist durch eine Lagerstange 5 gebildet, die in einer Lagerrichtung 6 angeordnet ist und auf der oder in der die Adapter 3 mit ihren beiden Rollen längs der Lagerstange 5 in Lagerrichtung 6 verschiebbar und in den Lagerplätzen in Lagerrichtung 6 lagerbar sind. Zwischen je zwei Regalen 2 ist eine Regalgasse 7 gebildet, in der ein durch ein Ebenengediengerät 8 gebildetes Lastaufnahmemittel in einer Fahrtrichtung 9 längs der Regalgasse 7 auf Schienen 10 verfahrbar angeordnet ist.

Das Ebenenbediengerät 8 weist zwei gegenüberliegende Transferschienen 11 auf, um einen Transferweg von den Lagerstangen 5 der entlang der Regalgasse 7 angeordneten gegenüberliegenden Regalen 2 zu einer Zwischenlagerstange 12 zu bilden. Die Transferschienen 11 und die Zwischenlagerstange 12 weisen einen Kettenförderer 13 zum Transport der Adapter 3 auf und bilden hierbei Transfermittel 20. Bei einem Transfervorgang werden mit dem Transfermittel 20 ein der mehrere mit dem Ebenenbediengerät 8 transportierte Ladungsträger 4 von dem Ebenenbediengerät 8 auf die Lagerstange 5 geschoben oder ein oder mehrere Ladungsträger 4 von der Lagerstange 5 auf die Zwischenlagerstange 12 des Ebenenbediengeräts 8 aufgenommen. Die Lagerstangen 5 sind mit beispielsweise 1 bis 5 Grad in Richtung der Regalgasse 7 geneigt, damit die Ladungsträger 5 auf den Adaptern 3 durch die Schwerkraft angetrieben von der Lagerstange 5 in Richtung des Ebenenbediengeräts 8 rollen. Eine Verriegelungseinheit an dem der Regalgasse 7 zugewandten Ende der Lagerstangen 5 verhindert, dass Ladungsträger 4 von der Lagerstange 5 rollen, wenn das Ebenenbediengerät 8 nicht bei der Lagerstange 5 steht. Durch Entriegeln der Verriegelungseinheit wird der Transferweg für den Transfervorgang freigegeben.

Das Ebenenbediengerät 8 ist nunmehr zum Transportieren der Ladungsträger 4 in der Fahrtrichtung 9 ausgebildet. Um dies zu ermöglichen weist das Ebenenbediengerät 8 Verdrehmittel auf, die gemäß diesem ersten Ausführungsbeispiel der Erfindung durch die gebogenen Transferschienen 11 gebildet sind. Durch die Transferschienen 11 werden die Ladungsträger 4 bei dem Transfervorgang zwischen der Fahrtrichtung 9 auf dem Ebenenbediengerät 8 und der Lagerrichtung 6 auf der Lagerstange 5 verdreht. Hierdurch ist der Vorteil erhalten, dass die Anzahl der mit dem Ebenenbediengerät 8 transportierbaren Ladungsträger 4 nicht durch die Breite der Regalgasse 7 begrenzt ist. Die Zwischenlagerstange 12 kann die gleiche Länge aufweisen wie die Lagerstange 5, um alle auf einer Lagerstange 5 gelagerten Ladungsträger 4 bei nur einer Fahrt des Ebenenbediengeräts ein- oder auslagern zu können. Die Zwischenlagerstange 12 könnte aber genauso länger als die Lagerstange 5 ausgebildet sein, um noch mehr Ladungsträge 4 pro Fahrt des Ebenenbediengeräts 8 transportieren zu können. Bei nur einer Fahrt des Ebenenbediengeräts 8 durch die Regalgasse 7 können daher Ladungsträger 4 von einer Vielzahl von Lagerstangen 5 dieser Regalebene auf die Zwischenlagerstange 12 aufgenommen werden beziehungsweise auch in dafür vorgesehene Lagerorte zur späteren Verwendung vorsortiert werden.

Das Ebenenbediengerät 8 weist weiters beim Übergang der zwei gegenüberliegenden Transferschienen 11 auf die Zwischenlagerstange 12 eine Weiche 14 auf, die zum Umschalten von dem Transferweg, zwischen den Lagerstangen 5 der gegenüberliegenden Lagerplätze und der Zwischenlagerstange 12, auf einen Auslagerungsweg, zwischen der Zwischenlagerstange 12 und einer Auslagerungsstange 15, ausgebildet ist. Ladungsträger 4 können über den Transferweg vorerst von einer Lagerstange 5 auf die Zwischenlagerstange 12 und nach Umlegen der Weiche 14 durch eine Steuerung von der Zwischenlagerstange 12 auf die Auslagerungsstange 15 transferiert werden. Die Auslagerungsstange 15 ist ausgehend von der Weiche 14 um beispielsweise 1 bis 5 Grad nach unten geneigt, um die Ladungsträger 4 mit ihren Adaptern 3 an das Ende der Auslagerungsstange 15 rollen zu lassen. Wenn das Ebenenbediengerät 8 an das Ende der Regalgasse 7 fährt, dann koppelt die Auslagerungsstange 15 an eine in den Figuren nicht näher dargestellte Hängefördertechnik an, die in Fahrrichtung 9 an die Regalgasse 7 angebunden ist, um auf der Auslagerungsstange 15 befindliche Ladungsträger 4 aus dem Lagersystem 1 auszulagern. Eine solche Hängefördertechnik ist dem Fachmann bekannt und dazu ausgebildet die Ladungsträger 4 auch über Schrägen von 45 Grad und mehr nach oben und unten zu einem Packplatz zu transportieren.

Das Lagersystem 1 weist weiters eine in den Figuren nicht näher dargestellte Hängefördertechnik auf, die in Lagerrichtung 6 parallel zu der letzten am Ende des Regals 2 angeordneten Lagerstange 5 an die Regalgasse 7 angebunden ist. An einem Wareneingang werden die zum Einlagern in das Lagersystem 1 vorgesehenen Artikel mit einem Kleiderbügel oder einer Fördertasche auf den Hängeförderer gehängt und zu der Regalgasse 7 transportiert, von der aus die Ladungsträger 4 mit dem Ebenenbediengerät 8 in eines der Regale 2 eingelagert werden sollen. Der in das jeweilige Regal 2 einzulagernde Ladungsträger 4 wird dann über einen Einlagerungsweg von dem Hängeförderer über die Transferschiene 11 auf die Zwischenlagerstange 12 transferiert. Besonders vorteilhaft ist hierbei, dass auf der Auslagerungsstange 15 befindliche Ladungsträger 4 gleichzeitig auf den Hängeförderer zum Auslagern übergeben werden können, während andere Ladungsträger 4 von dem Hängeförderer zum Einlagern über den Einlagerungsweg auf die Zwischenlagerstange 12 transferiert werden. Hierdurch kann der Aus- und Einlagerungsvorgang beschleunigt werden.

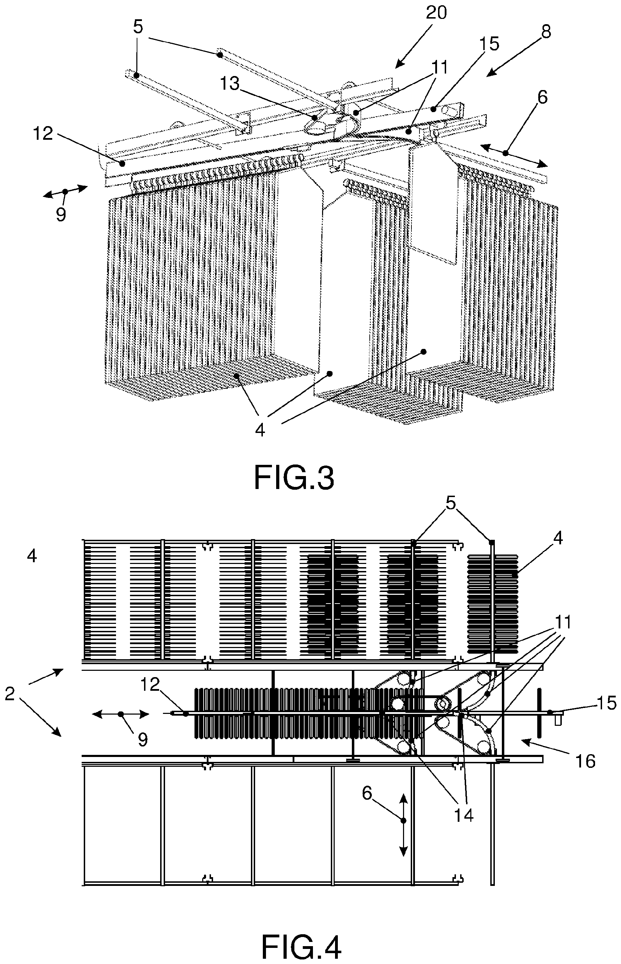

Gemäß einem weiteren in der Figur 4 dargestellten Ausführungsbeispiel der Erfindung sind auf einem Ebenenbediengerät 16 vier Transferschienen 11 vorgesehen, um aus benachbarten Lagerplätzen gegenüberliegender Regale 2 Ladungsträger 4 auf die Zwischenlagerstange 12 zu transportieren ohne das Ebenenbediengerät 16 zu verfahren. Hierdurch kann der Aus- und Einlagerungsvorgang noch weiter beschleunigt werden. Es wären auch Lastaufnahmemittel mit sechs oder acht Transferschienen realisierbar, um aus jeweils drei oder vier benachbarten Lagerplätzen gegenüberliegender Regale Ladungsträger gleichzeitig aus- oder einzulagern ohne das Lastaufnahmemittel verfahren zu müssen. Eine solches Ausführungsbeispiel wäre insbesondere im e-Commerce Bereich vorteilhaft zu realisieren.

Bei den Ebenenbediengeräten 8 und 16 sind die Weichen 14 an den Transferschienen 11 an Selektiermittel gekoppelt. Die Selektiermittel sind durch einen RFID-Reader gebildet, der RFID-Tags in jedem der Adapter 3 ausliest. In einer Datenbank des Lagerverwaltungsrechners werden beim Einlagern Seriennummer der RFID-Tags der Adapter 3 gemeinsam mit der Artikelbezeichnung der Artikel in dem jeweiligen Ladungsträger 4 gespeichert. Hierdurch ist ermöglicht, dass die Selektiermittel, gesteuert von dem Lagerverwaltungsrechner, die Ladungsträger 4 beim Auslagern aus den Lagerplätzen bereits Vorkommissionieren und einem Kundenauftrag zugeordnete Ladungsträger 4 bereits hintereinander auf der Zwischenlagerstange 12 des Ebenenbediengeräts 4 von mehreren Lagerplätzen des Regals 2 zusammensammeln. Die von den einzelnen Ebenen des Regals 2 für einen Kundenauftrag hintereinander auf der Auslagerstange 15 an die Hängefördertechnik übergebenen Ladungsträger 4 können dann durch die Hängefördertechnik am Packplatz zusammen geführt werden, weshalb bei dem erfindungsgemäßen automatisierten Lagersystem 1 auf konventionelle Kommissionierplätze verzichtet werden kann. Auch das transferieren der Ladungsträger 4 von der Zwischenlagerstange 12 auf die Lagerstangen 5 kann von dem Lagerverwaltungsrechner gesteuert mittels der durch die Selektiermittel gekoppelten Weiche 14 selektiv erfolgen, weshalb auch mehrere unterschiedliche Artikel in Ladungsträgern 4 auf nur einer Lagerschiene 5 gelagert werden können. Das Lagersystem 1 muss daher die Artikel nicht sortenrein lagern, was vorteilhaft ist, da hierdurch die Lagerplätze wesentlich effizienter genutzt werden können.

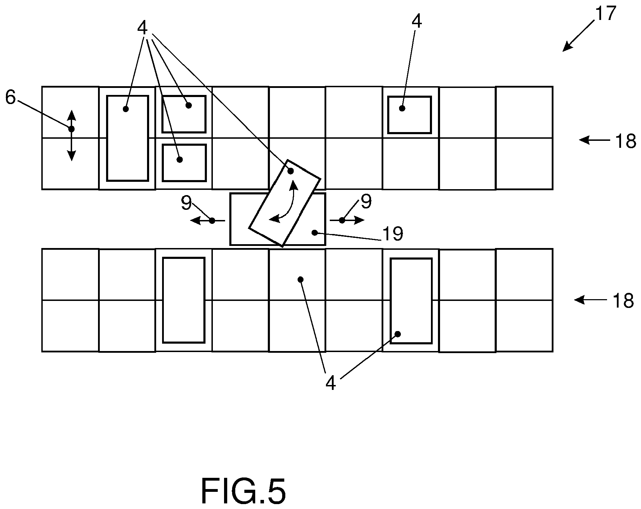

Figur 5 zeigt ein automatisches Lagersystem 17 für in Kisten als Ladungsträger 4 gelagerten Artikeln in einer Draufsicht. Regale 18 sind doppelt tief ausgeführt, um kleinere und größere Kisten lagern zu können. Ein Regalbediengerät 19 weist Verdrehmittel auf, die Kisten beim Auslagern aus dem Regal 18 von der Lagerrichtung 6 um 90 Grad in die Transportrichtung 9 verdrehen. Die Verdrehmittel könnten durch einen Drehteller oder Greifarme gebildet sein. Auch gemäß diesem Ausführungsbeispiel der Erfindung ist der Vorteil erhalten, dass die Regalgasse schmäler als die Regaltiefe gewählt werden kann.

Es kann erwähnt werden, dass die erfindungsgemäßen Transfermittel auf einem nur eine Regalebene bedienenden Ebenenbediengerät oder auf einem mehrere Regalebenen bedienenden Regalbediengerät vorgesehen sein können. Die Transferschienen könnten durch vergleichbare technische Mittel gebildet sein.

Gemäß einem weiteren Ausführungsbeispiel der Erfindung weist die Lagerrichtung einen von 90 Grad abweichenden Winkel zur Fahrtrichtung des Lastaufnahmemittels auf. Die Lagerstangen oder Lagerplätze können beispielsweise 75 Grad zur Fahrtrichtung angeordnet sein.

Gemäß einem weiteren Ausführungsbeispiel der Erfindung werden die Artikel direkt auf Paletten oder Trays in Regalen eingelagert. Auch bei diesem Ausführungsbeispiel wird beim Transfervorgang die Palette oder das Tray gedreht.

Es kann erwähnt werden, dass Adapter mit oder ohne Rollen ausgeführt sein können.

Weiters kann erwähnt werden, dass der Begriff "Verdrehen" im Umfang der Offenbarung dieses Dokuments dem Begriff "Orientieren" gleichzusetzen ist. Die Verdrehmittel beziehungsweise Orientierungsmittel verdrehen beziehungsweise orientieren den Ladungsträger entweder in Fahrtrichtung auf dem Lastaufnahmemittel oder in Lagerrichtung in dem Lagerplatz. Es wäre folglich beim Transfervorgang auch ein Verdrehen um mehrere Achsen des Ladungsträgers also ein Umorientieren des Ladungsträgers möglich.

## Patentansprüche

1. Automatisiertes Lagersystem (1; 17) mit zumindest zwei Regalen (2; 18) mit Lagerplätzen zum Lagern von Artikel aufweisenden Ladungsträger (4), wobei die Ladungsträger (4) in einer Lagerrichtung (6) in den Lagerplätzen lagerbar sind, und mit einer durch die zwei Regale (2; 18) gebildeten Regalgasse (7), in der ein ein Transfermittel (20) aufweisendes Lastaufnahmemittel (8; 19) in einer Fahrtrichtung (9) verfahrbar ist, um bei einem Transfervorgang mit dem Transfermittel (20) zumindest einen mit dem Lastaufnahmemittel (8; 19) transportierten Ladungsträger (4) von dem Lastaufnahmemittel (8; 19) in den Lagerplatz einzulagern oder zumindest einen Ladungsträger (4) aus dem Lagerplatz auf das Lastaufnahmemittel (8; 19) aufzunehmen, wobei
das Lastaufnahmemittel (8; 19) zum Transportieren zumindest eines Ladungsträgers (4) in Fahrtrichtung (9) ausgebildet ist,
wobei das Transfermittel (20) mindestens ein Verdrehmittel aufweist, um den Ladungsträger (4) bei dem Transfervorgang zwischen der Fahrtrichtung (9) auf dem Lastaufnahmemittel (8; 19) und der Lagerrichtung (6) in dem Lagerplatz zu verdrehen, und wobei der Ladungsträger (4) als Adapter zur Aufnahme von Artikeln enthaltenden Kleiderbügeln oder zur Aufnahme von Artikeln beinhaltenden Taschen gebildet ist, wobei die Lagerplätze als
Lagerstangen (5) ausgebildet sind, die beim Transfervorgang gemeinsam mit den Transfermitteln (20) und einer Zwischenlagerstange (12) des Lastaufnahmemittels (8; 19) einen Transferweg bilden, um die Adapter zwischen Lagerplatz und Lastaufnahmemittel (8; 19) zu transferieren, wobei das Transfermittel (20) zumindest eine die Verdrehmittel bildende gebogene Transferschiene (11) aufweist, um den Adapter von der Lagerrichtung (6) in die Fahrtrichtung (9) zu verdrehen.

2. Automatisiertes Lagersystem (1; 17) gemäß Anspruch 1, **dadurch gekennzeichnet, dass** die Verdrehmittel bei dem Transfervorgang zum Verdrehen des Ladungsträgers (4) um im Wesentlichen 90 Grad ausgebildet sind.

3. Automatisiertes Lagersystem (1; 17) gemäß Anspruch 1 oder 2, **dadurch gekennzeichnet, dass** der Ladungsträger (4) aus folgender Gruppe ausgewählt ist: Adapter zur Aufnahme von Artikel haltenden Kleiderbügeln, Adapter zur Aufnahme von Artikel beinhaltenden Taschen, Kiste, Tray, Palette, Karton, Tasche;
und/oder, dass das Lastaufnahmemittel (8; 19) aus folgender Gruppe ausgewählt ist:
Ebenenbediengerät (8), Regalbediengerät (19).

4. Automatisiertes Lagersystem (1) gemäß Anspruch 1, **dadurch gekennzeichnet, dass** das Lastaufnahmemittel (8; 19) zwei gegenüberliegende Transferschienen (11) aufweist, um einen Transferweg von den Lagerstangen (5) der entlang der Regalgasse (7) angeordneten gegenüberliegenden Regalen (2) zu der einen Zwischenlagerstange (12) zu bilden.

5. Automatisiertes Lagersystem (1) gemäß Anspruch 1, **dadurch gekennzeichnet, dass** beim Übergang von der Transferschiene (11) auf die Zwischenlagerstange (12) eine Weiche (14) vorgesehen ist, die zum Umschalten von dem Transferweg zwischen Lagerstange (5) und Zwischenlagerstange (12) auf einen Auslagerungsweg, zwischen Zwischenlagerstange (12) und einer Auslagerungsstange (15) des Lastaufnahmemittels (8; 19), ausgebildet ist.

6. Automatisiertes Lagersystem (1) gemäß Anspruch 4, **dadurch gekennzeichnet, dass** beim Übergang der zwei gegenüberliegenden Transferschienen (11) auf die Zwischenlagerstange (12) eine Weiche (14) vorgesehen ist, die zum Umschalten von dem Transferweg zwischen den Lagerstangen (5) der gegenüberliegenden Lagerplätze und der Zwischenlagerstange (12), auf den Auslagerungsweg, zwischen Zwischenlagerstange (12) und Auslagerungsstange (15), ausgebildet ist.

7. Automatisiertes Lagersystem (1) gemäß einem der Ansprüche 1 bis 6, **dadurch gekennzeichnet, dass** in der Transferschiene (11) und der Zwischenlagerstange (12) ein Förderer insbesondere Kettenförderer (13) zum Transport der Adapter bei dem Transfervorgang vorgesehen ist.

8. Automatisiertes Lagersystem (1) gemäß einem der Ansprüche 1 bis 7, **dadurch gekennzeichnet, dass** eine Hängefördertechnik in Lagerrichtung (6) an die Regalgasse (7) angebunden ist, von der in die Regale (2) einzulagernde Ladungsträger (4) über einen Einlagerungsweg von dem Hängeförderer über die Transferschiene (11) auf die Zwischenlagerstange (12) transferierbar sind.

9. Automatisiertes Lagersystem (1) gemäß einem der Ansprüche 1 bis 7, **dadurch gekennzeichnet, dass** an der Regalgasse (7) oder in der Regalgasse (7) oder in dem Regal (2) ein Vertikalförderlift vorgesehen ist, der eine Liftzwischenlagerstange aufweist auf die Ladungsträger (4) von der Auslagerungsstange (15) und/oder über die Transferschiene (11) von beziehungsweise auf die Zwischenlagerstange (12) verschiebbar sind, um diese in eine andere Ebene des Regals (2) zu transportieren.

10. Automatisiertes Lagersystem (1) gemäß einem der Anspruch 5 bis 9, **dadurch gekennzeichnet, dass** eine Hängefördertechnik in Fahrrichtung (9) oder über ein Eckelement an die Regalgasse (7) angebunden ist, um auf der Auslagerungsstange (15) befindliche Ladungsträger (4) aus dem Lagersystem (1) auszulagern.

11. Automatisiertes Lagersystem (1) gemäß einem der Ansprüche 1 bis 10, **dadurch gekennzeichnet, dass** vier oder mehr Transferschienen (11) vorgesehen sind, um aus benachbarten Lagerplätzen gegenüberliegender Regale (2) Ladungsträger (4) auf die Zwischenlagerstange (12) zu transportieren ohne das Lastaufnahmemittel (8; 19) zu verfahren.

12. Automatisiertes Lagersystem (1) gemäß Anspruch 6, **dadurch gekennzeichnet, dass** mit der Weiche (14) gekoppelte Selektiermittel vorgesehen sind, die ein Vorkommissionieren von in den Lagerplätzen gelagerten Ladungsträgern (4) auf die Zwischenlagerstange (12) des Lastaufnahmemittels (8; 19) ermöglichen.

## Claims

1. An automated storage system (1; 17) comprising at least two shelves (2; 18) having storage locations for storing load carriers (4) comprising articles, wherein the load carriers (4) are storable in a storage direction (6) in the storage locations, and a shelve aisle (7) formed by the two shelves (2; 18), in which a load reception means (8; 19) comprising a transfer means (20) is movable in a travel direction (9) in order to store at least one load carrier (4) transported with the load reception means (8; 19) from the load reception means (8; 19) in the storage location or to pick up at least one load carrier (4) from the storage location onto the load reception means (8; 19) during a transfer procedure with the transfer means (20), wherein
the load reception means (8; 19) is formed for transporting at least one load carrier (4) in the travel direction (9),
wherein the transfer means (20) comprises at least one rotation means in order to rotate the load carrier (4) during the transfer procedure between the travel direction (9) on the load reception means (8; 19) and the storage direction (6) in the storage location, and wherein the load carrier (4) is formed as an adaptor for receiving clothes hangers containing articles or for receiving bags containing articles, wherein the storage locations are formed as storage bars (5) that form a transfer path together with the transfer means (20) and an intermediate storage bar (12) of the load reception means (8; 19) during the transfer procedure, in order to transfer the adaptors between storage location and load reception means (8; 19),
wherein the transfer means (20) comprises at least one bent transfer rail (11) forming the rotation means in order to rotate the adaptor from the storage direction (6) to the travel direction (9).

2. The automated storage system (1; 17) according to claim 1, **characterized in that** the rotation means are formed for rotating the load carriers (4) by essentially 90 degrees during the transfer procedure.

3. The automated storage system (1; 17) according to claim 1 or 2, **characterized in that** the load carrier (4) is selected from the following group: adaptors for receiving clothes hangers holding articles, adaptors for receiving bags containing articles, a crate, tray, palette, box, bag;
and/or that the load reception means (8; 19) is selected from the following group: level operation device (8), shelve operation device (19).

4. The automated storage system (1) according to claim 1, **characterized in that** the load reception means (8; 19) comprises two opposite transfer rails (11) in order to form a transfer path from the storage bars (5) of the opposite shelves (2) arranged along the shelve aisle (7) to the one intermediate storage bar (12).

5. The automated storage system (1) according to claim 1, **characterized in that** a switch (14) is provided at the transition between the transfer rail (11) and the intermediate storage bar (12), which is formed for switching between the transfer path, located between storage bar (5) and intermediate storage bar (12), and a removal path, located between intermediate storage bar (12) and a removal bar (15) of the load reception means (8; 19).

6. The automated storage system (1) according to claim 4, **characterized in that** a switch (14) is provided at the transition between the two opposite transfer rails (11) and the intermediate storage bar (12), which is formed for switching between the transfer path, located between the storage bars (5) of the opposite storage locations and the intermediate storage bar (12), and the removal path, located between the intermediate storage bar (12) and the removal bar (15).

7. The automated storage system (1) according to any one of the claims 1 to 6, **characterized in that** a conveyor, in particular a chain conveyor (13), is provided in the transfer rail (11) and the intermediate storage bar (12) for transporting the adaptors during the transfer procedure.

8. The automated storage system (1) according to any one of the claims 1 to 7, **characterized in that** a hanging conveyor system is connected to the shelve aisle (7) in the storage direction (6), from which load carriers (4) to be stored in the shelves (2) are transferable via a storage path from the hanging conveyor via the transfer rails (11) onto the intermediate storage bar (12).

9. The automated storage system (1) according to any one of the claims 1 to 7, **characterized in that** a vertical conveyor lift is provided at the shelve aisle (7) or in the shelve aisle (7) or in the shelve (2), which comprises a lift intermediate storage bar, onto which load carriers (4) are movable from the removal bar (15) and/or via the transfer rail (11) from or onto the intermediate storage bar (12) in order to transport it onto a different level of the shelve (2).

10. The automated storage system (1) according to any one of the claims 5 to 9, **characterized in that** a hanging conveyor system ins connected to the shelve aisle (7) in the travel direction (9) or via a corner element in order to remove load carriers (4) located on the removal bar (15) from the storage system (1).

11. The automated storage system (1) according to any one of the claims 1 to 10, **characterized in that** four or more transfer rails (11) are provided in order to transport load carriers (4) from neighboring storage locations of opposite shelves (2) onto the intermediate storage bar (12) without moving the load reception means (8; 19).

12. The automated storage system (1) according to claim 6, **characterized in that** selection means coupled with the switch (14) are provided, which allow the conduction of pre-order picking of load carriers (4) stored in the storage locations onto the intermediate storage bar (12) of the load reception means (8; 19).

## Revendications

1. Système de stockage automatisé (1 ; 17) avec au moins deux rayonnages (2 ; 18) avec des emplacements de stockage pour le stockage de supports de charge (4) présentant des articles, lesquels supports de charge (4) peuvent être stockés dans une direction de stockage (6) dans les emplacements de stockage, et avec une allée de rayonnages (7) formée par les deux rayonnages (2 ; 18) dans laquelle un moyen de réception de charges (8 ; 19) comportant un moyen de transfert (20) peut être déplacé dans une direction de déplacement (9) afin de stocker, lors d'un processus de transfert avec le moyen de transfert (20), au moins un support de charge (4) transporté avec le moyen de réception de charges (8, 19) depuis le moyen de réception de charges (8 ; 19) dans l'emplacement de stockage ou de réceptionner au moins un support de charge (4) depuis l'emplacement de stockage sur le moyen de réception de charges (8, 19),
lequel le moyen de réception de charges (8 ; 19) est configuré pour transporter au moins un support de charge (4) dans la direction de déplacement (9),
le moyen de transfert (20) comportant au moins un moyen de rotation pour faire pivoter le support de charge (4) lors du processus de transfert entre la direction de déplacement (9) sur le moyen de réception de charges (8 ; 19) et la direction de stockage (6) dans l'emplacement de stockage, et le support de charge (4) faisant office d'adaptateur pour la réception de cintres supportant des articles ou pour la réception de sacs contenant des articles, les emplacements de stockage étant configurés comme des tringles de stockage (5) qui forment, lors du processus de transfert, avec les moyens de transfert (20) et une tringle de stockage intermédiaire (12) du moyen de réception de charges (8 ; 19), une voie de transfert pour transférer les adaptateurs entre l'emplacement de stockage et le moyen de réception de charges (8 ; 19),
le moyen de transfert (20) comportant au moins un rail de transfert (11) coudé constituant le moyen de rotation pour faire pivoter l'adaptateur de la direction de stockage (6) dans la direction de déplacement (9).

2. Système de stockage automatisé (1 ; 17) selon la revendication 1, **caractérisé en ce que** les moyens de rotation pour faire pivoter le support de charge (4) lors du processus de transfert sont configurés sensiblement à 90 degrés.

3. Système de stockage automatisé (1 ; 17) selon la revendication 1 ou 2, **caractérisé en ce que** le support de charge (4) est sélectionné dans le groupe suivant : adaptateur pour la réception de cintres supportant des articles, adaptateur pour la réception de sacs contenant des articles, caisse, bac, palette, carton, sac
et/ou que le moyen de réception de charges (8 ; 19) est sélectionné dans le groupe suivant :
module de commande de niveau (8), module de commande de rayonnage (19).

4. Système de stockage automatisé (1) selon la revendication 1, **caractérisé en ce que** le moyen de réception de charges (8, 19) comporte deux rails de transfert (11) opposés pour former une voie de transfert des tringles de stockage (5) des rayonnages (2) disposés de part et d'autre de l'allée de rayonnages (7) à la tringle de stockage intermédiaire (12).

5. Système de stockage automatisé (1) selon la revendication 1, **caractérisé en ce que**, pour le passage du rail de transfert (11) à la tringle de stockage intermédiaire (12), il est prévu un aiguillage (14) qui est configuré pour le passage de la voie de transfert entre la tringle de stockage (5) et la tringle de stockage intermédiaire (12) à une voie de déstockage entre la tringle de stockage intermédiaire (12) et une tringle de déstockage (15) du moyen de réception de charges (8 ; 19).

6. Système de stockage automatisé (1) selon la revendication 4, **caractérisé en ce que**, pour le passage des deux rails de transfert (11) opposés à la tringle de stockage intermédiaire (12), il est prévu un aiguillage (14) qui est configuré pour le passage de la voie de transfert entre les tringles de stockage (5) des emplacements de stockage opposés et la tringle de stockage intermédiaire (12) à une voie de déstockage entre la tringle de stockage intermédiaire (12) et la tringle de déstockage.

7. Système de stockage automatisé (1) selon une des revendications 1 à 6, **caractérisé en ce que**, dans le rail de transfert (11) et la tringle de stockage intermédiaire (12), il est prévu un transporteur, en particulier un transporteur à chaîne (13) pour le transport des adaptateurs lors du processus de transfert.

8. Système de stockage automatisé (1) selon une des revendications 1 à 7, **caractérisé en ce qu'**un système de transport aérien est relié à l'allée de rayonnages (7) dans la direction de stockage (6), par lequel les supports de charge (4) à stocker dans les rayonnages (2) peuvent être transférés via une voie de stockage du transporteur aérien par le rail de transfert (11) sur la tringle de stockage intermédiaire (12).

9. Système de stockage automatisé (1) selon une des revendications 1 à 7, **caractérisé en ce que** sur l'allée de rayonnages (7) ou dans l'allée de rayonnages (7) ou dans le rayonnage (2) est prévu un monte-charge vertical qui comporte une tringle de stockage intermédiaire de monte-charge sur laquelle des supports de charge (4) peuvent glisser de la tringle de déchargement (15) et/ou via le rail de transfert (11) de ou sur la tringle de stockage intermédiaire (12) pour transporter ceux-ci sur un autre niveau du rayonnage (2).

10. Système de stockage automatisé (1) selon une des revendications 5 à 9, **caractérisé en ce qu'**un système de transport aérien est relié à l'allée de rayonnages (7) dans la direction de déplacement (9) ou par un élément d'angle pour décharger les supports de charge (4) se trouvant sur la tringle de déchargement (15) du système de stockage (1).

11. Système de stockage automatisé (1) selon une des revendications 1 à 10, **caractérisé en ce que** quatre rails de transfert (11) ou davantage sont prévus pour transporter des supports de charge (4) depuis des emplacements de stockages contigus de rayonnages (2) opposés sur la tringle de stockage intermédiaire (12) sans déplacer le moyen de réception de charges (8 ; 19).

12. Système de stockage automatisé (1) selon la revendication 6, **caractérisé en ce que** sont prévus des moyens de sélection couplés avec l'aiguillage (14) qui permettent un précommissionnement de supports de charge (4) stockés dans les emplacements de stockage sur la tringle de stockage intermédiaire (12) du moyen de réception de charges (8 ; 19).
